Europäisches Patentamt

European Patent Office

Office européen des brevets

(19)

(11) **EP 0 970 391 B1**

(12) **FASCICULE DE BREVET EUROPEEN**

(45) Date de publication et mention
de la délivrance du brevet:
**19.12.2001   Bulletin 2001/51**

(51) Int Cl.⁷: **G01S 17/46**, G01S 11/12,
G01J 1/20

(21) Numéro de dépôt: **98917202.8**

(22) Date de dépôt: **20.03.1998**

(86) Numéro de dépôt international:
**PCT/FR98/00572**

(87) Numéro de publication internationale:
**WO 98/43112 (01.10.1998 Gazette 1998/39)**

(54) **DISPOSITIF OPTIQUE DE MESURE DE DISTANCE SANS CONTACT D'UNE SOURCE LUMINEUSE**

OPTISCHES GERÄT ZUR KONTAKTLOSEN MESSUNG DES ABSTANDES ZU EINER LICHTQUELLE

OPTICAL DEVICE FOR THE CONTACTLESS MEASUREMENT OF DISTANCE OF A LIGHT SOURCE

(84) Etats contractants désignés:
**AT BE CH DE DK ES FR GB IT LI LU NL SE**

(30) Priorité:  **21.03.1997  FR 9703457**

(43) Date de publication de la demande:
**12.01.2000   Bulletin 2000/02**

(73) Titulaire: **Imagine Optic**
**91400 Orsay (FR)**

(72) Inventeurs:
• **LEVECQ, Xavier**
**F-91190 Gif sur Yvette (FR)**
• **BUCOURT, Samuel**
**F-91440 Bures sur Yvette (FR)**

(74) Mandataire: **Pontet, Bernard**
**Pontet Allano & Associés s.e.l.a.r.l. 25 rue Jean-Rostand Parc Club Orsay Université 91893 Orsay Cédex (FR)**

(56) Documents cités:
EP-A- 0 762 143     US-A- 5 233 174
US-A- 5 361 127     US-A- 5 493 391

• **ADELSON E H ET AL: "SINGLE LENS STEREO WITH A PLENOPTIC CAMERA" IEEE TRANSACTIONS ON PATTERN ANALYSIS AND MACHINE INTELLIGENCE, vol. 14, no. 2, 1 février 1992, pages 99-106, XP000248474**

## Description

La présente invention concerne un dispositif optique de mesure de distance sans contact d'une source lumineuse. Par exemple, elle s'applique dans le milieu industriel au contrôle dimensionnel non destructif (mesure de niveaux ou d'épaisseur, contrôle du profil de pièces, cartographie, localisation de robot).

Parmi les dispositifs optiques de mesure de distance sans contact, les systèmes à triangulation, très répandus dans le milieu industriel, forment des dispositifs bas coût et de mise en oeuvre facile. Le principe de la mesure de la distance d'un objet au dispositif est le calcul de l'angle sous lequel est vu cet objet. Un point ou une ligne lumineux projetés hors axe (c'est-à-dire suivant un axe différent de l'axe optique du système) sur l'objet sont réimagés sur un plan au voisinage de celui d'un détecteur formant une tache lumineuse; Dans ce type de dispositif, l'objet est considéré comme ponctuel; la position de la tache sur le détecteur, définie par exemple par le barycentre de la répartition de l'intensité, est proportionnelle à la tangente de l'angle sous lequel est vu le point ou la ligne projetés. Ce dispositif ne fait pas de reconnaissance d'image et ne nécessite pas d'avoir une bonne résolution. Au contraire, il travaille avec une optique de faible ouverture numérique et présente une bonne profondeur de champ de mesure. Un des principaux inconvénients de cette méthode est la projection hors axe par un système d'éclairage de la source lumineuse, qui a pour effet de créer des zones d'ombre non mesurables, en particulier lorsque l'objet mesuré contient des fréquences spatiales élevées (c'est-à-dire de fortes pentes). De plus, les dimensions d'un tel système augmentent notablement avec la distance de travail, du fait de l'angle nécessaire entre la voie d'émission et la voie de réception.

Plus perfectionnés sont les dispositifs basés sur le principe de la stéréoscopie étudiés par exemple pour des applications automobiles. Ils mettent en oeuvre deux systèmes optiques associés à deux moyens de détection optique séparés d'une distance L, chaque système optique formant d'un objet une image, la distance de l'objet étant alors déterminée par la mesure de l'écart $\ell$ entre les deux images données par les deux moyens de détection. Dans ce type de dispositif, la précision de mesure de la distance est directement proportionnelle à la distance L, ce qui nécessite d'avoir deux moyens de détection distincts et suffisamment éloignés l'un de l'autre. De ce fait, ce type de dispositif est encombrant et de mise en oeuvre contraignante car il nécessite une très bonne stabilité sur la position relative des détecteurs. Pour gagner en précision, certains de ces dispositifs possèdent des algorithmes de reconnaissance et de traitement d'images perfectionnés leur permettant de mieux apprécier l'écart $\ell$ (voir par exemple le brevet EP 0558 026). Ces dispositifs nécessitent des optiques de forte ouverture numérique (rapport focale/diamètre faible) pour avoir une très bonne résolution optique et présentent donc une faible profondeur de champ de mesure qui leur impose de travailler avec des objectifs d'adaptation du champ.

D'autres dispositifs de mesure de distance sont basés sur l'étude de la défocalisation du point image d'un point objet à travers une lentille principale lorsque le point objet est déplacé de part et d'autre d'une position nominale (voir par exemple le document IEEE "Transactions on pattern analysis and machine intelligence", vol. 14, n° 2, février 1992, pages 99-106, Adelson et al.).

L'invention propose un dispositif optique de mesure de distance compact, d'excellente précision, présentant une bonne profondeur de champ de mesure et pouvant travailler sur l'axe du dispositif. Il comporte un ensemble de moyens d'imagerie formant d'une source lumineuse un ensemble de taches lumineuses sur un moyen de détection, la distance de la source étant déterminée à partir des positions relatives des taches. Ces moyens d'imagerie sont positionnés dans un plan proche du plan pupillaire, chaque moyen constituant une sous-pupille. Dans le dispositif selon l'invention, la précision sur la distance dépend du nombre de taches lumineuses. Plus ce nombre est grand, plus la mesure sera précise; ainsi, avec des moyens d'imagerie suffisamment petits, par exemple des microlentilles, le dispositif ne nécessite qu'un seul moyen de détection, par exemple une barrette ou une matrice de détecteurs.

Plus précisément, l'invention concerne un dispositif de mesure de distance sans contact d'une source lumineuse comportant un moyen de détection optique formé de détecteurs élémentaires et un ensemble de N moyens d'imagerie (6), N ≥ 3, caractérisé en ce que:

- les moyens d'imagerie permettent d'imager la source lumineuse sur un plan au voisinage de celui du moyen de détection, formant ainsi sur ledit moyen un ensemble d'au moins trois taches lumineuses, chaque tache s'étalant sur au moins deux détecteurs élémentaires;
- le dispositif comporte en outre, un circuit de calcul permettant, à partir des positions relatives d'au moins trois taches lumineuses, de calculer au moins un paramètre caractéristique de la distance de la source lumineuse au dispositif avec une précision dépendant du nombre N de taches lumineuses.

Avantageusement, le circuit de calcul peut comporter une table de calibration contenant au moins un paramètre d'étalonnage dont les valeurs sont déterminées pour certaines distances de la source lumineuse et compare le paramètre caractéristique aux valeurs dudit paramètre d'étalonnage. Selon un mode de fonctionnement, le dispositif peut comporter en outre un circuit de localisation spatiale des taches lumineuses sur le moyen de détection, déterminant, pour chaque tache lumineuse, sa position par rapport à une origine de référence.

Le dispositif selon l'invention présente l'avantage d'être compact, simple à mettre en oeuvre, rapide car il met en oeuvre des algorithmes de calculs simples; il travaille avec des moyens d'imagerie de faible ouverture numérique car il ne nécessite pas de résolution optique et présente donc une grande profondeur de champ sans qu'il soit nécessaire d'utiliser un objectif d'adaptation du champ, même si cela est possible. En outre, un tel dispositif peut fonctionner sur l'axe, son grand nombre de moyens d'imagerie limitant les zones d'ombre non mesurables.

D'autres avantages et caractéristiques de l'invention apparaîtront à la lecture de la description illustrée par les figures suivantes:

- La figure 1 représente un premier exemple de dispositif selon l'invention.
- La figure 2 représente une variante du dispositif mettant en oeuvre un système d'éclairage placé hors axe et un objectif de mise en forme.
- La figure 3 montre le profil des taches lumineuses dans un exemple de dispositif selon l'invention.
- Les figures 4-1, 4-2, 4-3 illustrent des principes de calcul de la distance selon un mode de fonctionnement de l'invention.
- La figure 5 représente sous forme de diagramme un mode de calcul possible pour ce mode de fonctionnement.
- Les figures 6A et 6B représentent une variante du dispositif dans une configuration particulière où la source lumineuse secondaire est une ligne.

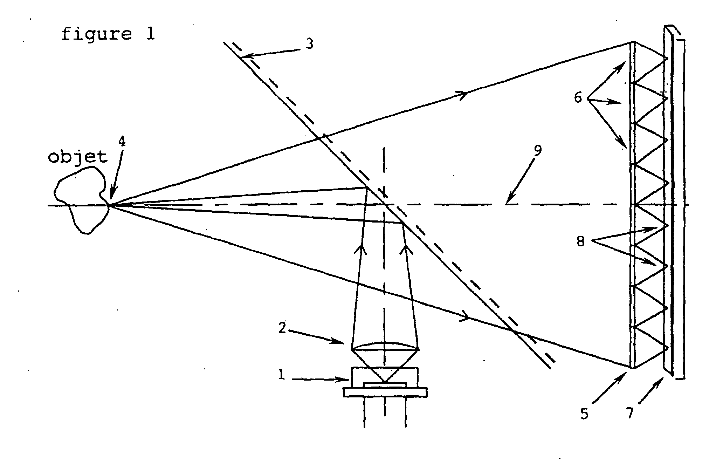

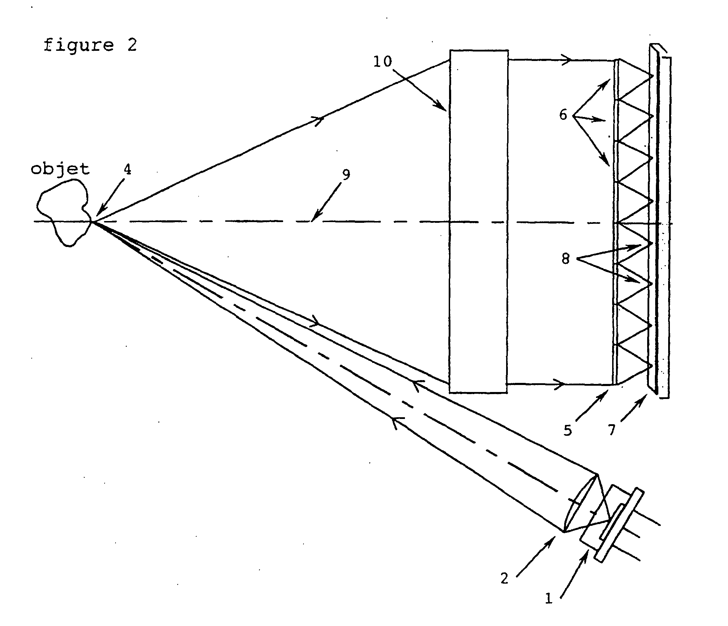

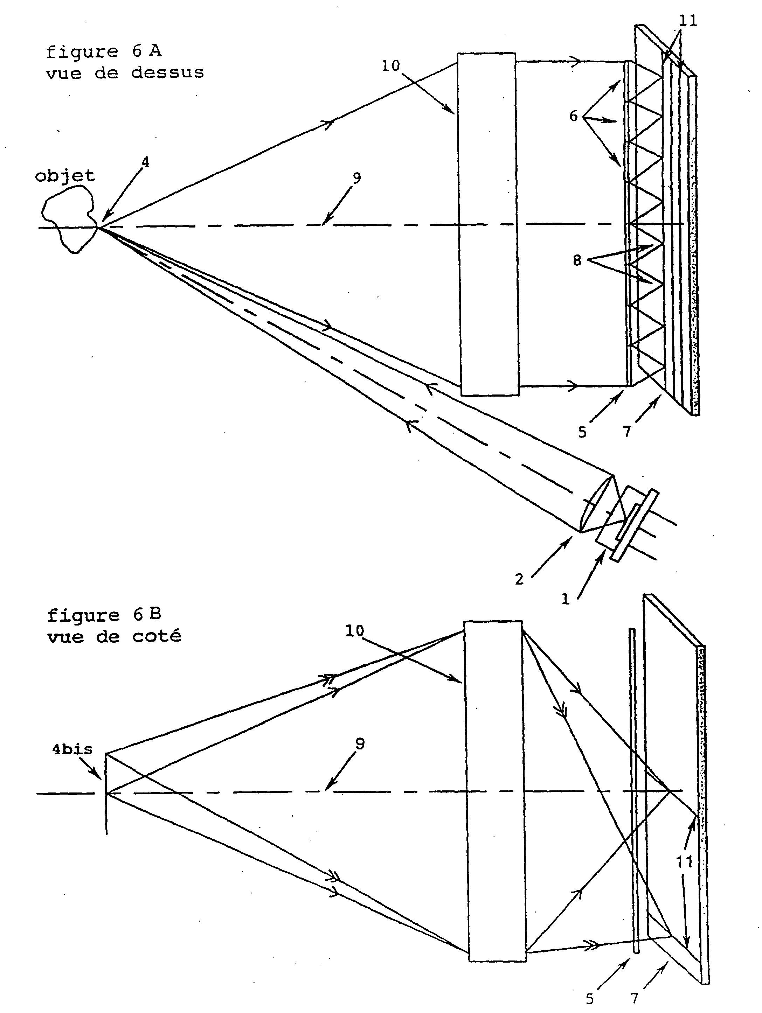

Les figures 1 et 2 illustrent des exemples de dispositifs selon l'invention permettant de mesurer la distance d'une source lumineuse 4. Dans un premier temps, la source est considérée ponctuelle ou quasi-ponctuelle. En général, cette source peut être naturelle (une molécule fluorescente par exemple), ou peut être une source lumineuse constituée d'une surface élémentaire d'un objet éclairée à l'aide d'un système d'éclairage, la source étant alors appelée source lumineuse secondaire. Ainsi, les dispositifs illustrés sur les figures 1 et 2 comportent un dispositif d'éclairage (1, 2) permettant par exemple de projeter un point lumineux sur l'objet dont on souhaite mesurer la distance au système. Ce point lumineux sert de source lumineuse secondaire 4. L'émetteur 1 de lumière utilisé pour l'éclairage peut être une diode laser couplée avec un objectif 2 assurant la focalisation à la distance nominale de travail. Cette focalisation peut se faire aussi suivant une ligne comme cela est illustré par les figures 6A et 6B et sera expliqué par la suite. Le dispositif d'éclairage peut être aligné (figure 1) avec l'axe optique de la voie de réception du système 9; dans ce cas, la colinéarité permet de s'affranchir des risques de zones d'ombre non mesurables. L'alignement du système d'éclairage sur l'axe peut se faire à l'aide d'une lame séparatrice 3. Le dispositif d'éclairage peut être hors axe (figure 2), ce qui simplifie le système; cette configuration peut être utilisée notamment pour les applications "grande distance" pour lesquelles les zones d'ombre sont négligeables. Il n'y a pas de contrainte angulaire de positionnement du système d'éclairage dans une configuration non colinéaire, contrairement aux systèmes à triangulation de l'art antérieur.

Si l'objet est diffusant, la source lumineuse renvoie la lumière dans toutes les directions dont une partie revient dans le système de réception. Si l'objet est réfléchissant, la source lumineuse renvoie la lumière dans un cône dont l'ouverture est définie par le dispositif d'éclairage et dont la direction de l'axe dépend de l'orientation de l'objet. Il est par conséquent nécessaire de prévoir l'adaptation adéquate; soit une orientation physique de l'objet, soit une forte ouverture optique du dispositif d'éclairage comme on en rencontre en microscopie.

Le dispositif selon l'invention comporte un moyen de détection 7 appelé aussi détecteur, formé de détecteurs élémentaires. Il comporte en outre un ensemble de N moyens d'imagerie 6, N $\geq$ 3, tels qu'ils permettent d'imager la source lumineuse 4 sur un plan au voisinage de celui du moyen de détection 7, formant ainsi sur ledit moyen un ensemble d'au moins trois taches lumineuses 8, chaque tache s'étalant sur au moins deux détecteurs élémentaires. Placés dans un plan pupillaire, les moyens d'imagerie permettent de décomposer le faisceau issu de la source lumineuse suivant autant de sous-pupilles.

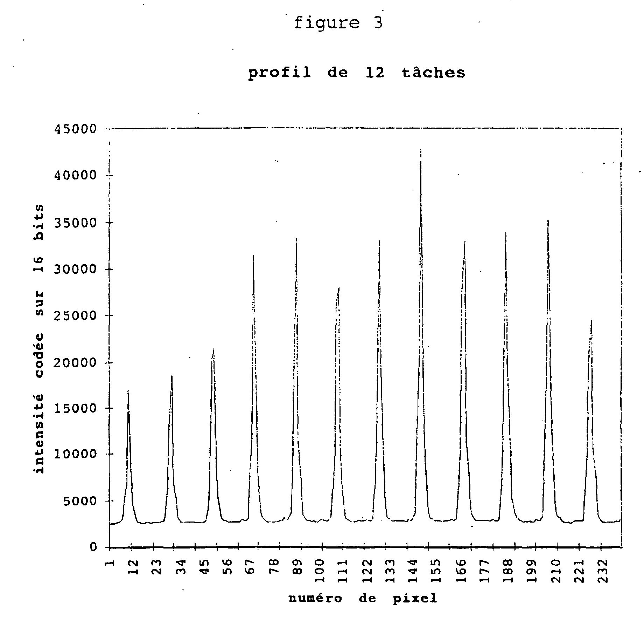

Dans l'exemple illustré figures 1 et 2, le moyen de détection est une barrette de détecteurs élémentaires (détecteurs agencés selon une ligne) et les moyens d'imagerie sont constitués d'une barrette de microlentilles sensiblement identiques et disposées côte à côte selon un pas sensiblement constant. Nous verrons par la suite qu'il n'est pas nécessaire pour le calcul de la distance de la source que le pas soit constant mais la répartition périodique des moyens d'imagerie même si la période n'est pas constante, simplifie les calculs permettant de calculer la distance. La barrette de microlentilles est placée devant la barrette de détecteurs, parallèlement à celle-ci. Par exemple, on peut utiliser une barrette CCD de 28 mm de long comprenant 2048 détecteurs élémentaires ou 'pixels' de 14 $\mu$m (format standard); on peut alors choisir de travailler avec une barrette de 100 microlentilles de diamètre 287 $\mu$m; chacune des sous-pupilles des microlentilles correspondra alors à environ 20 détecteurs élémentaires sur le détecteur; on choisira par exemple une focale de 10 mm relativement grande par rapport au diamètre de la microlentille pour que le profil de la tache lumineuse reste en limite de diffraction; dans l'exemple décrit, la limite de diffraction est d'environ 50 $\mu$m, ce qui correspond à 3 ou 4 détecteurs élémentaires. La figure 3 montre le profil de taches lumineuses obtenues expérimentalement sur le détecteur (dans ce cas particulier, une barrette CCD). Les microlentilles peuvent par exemple être sphériques ou cylindriques; dans ce cas, les génératrices des lentilles cylindriques sont sensiblement parallèles et l'axe de la barrette de détecteurs est perpendiculaire à celui des génératrices.

La figure 2 décrit une variante du dispositif comprenant un système optique 10 de mise en forme du faisceau. Celui-ci permet de définir une position nominale de la source à mesurer (au foyer de ce système) à laquelle correspond une distribution spécifique des taches lumineuses et son intérêt pour le calcul de la distance de la source sera expliqué par la suite. Ce système optique peut être une lentille simple ou une combinaison de lentilles. Il peut en outre comprendre une lentille cylindrique permettant de condenser la lumière sur une barrette de détecteurs (car cette dernière n'est généralement pas très large: de quelques microns à quelques centaines de microns); cette configuration est particulièrement intéressante dans le cas où le système utilise une barrette de lentilles cylindriques comme moyens d'imagerie.

Selon une variante, on peut également utiliser une barrette de microlentilles cylindriques placée devant une matrice de détecteurs élémentaires. Chaque microlentille forme alors de la source lumineuse une ligne parallèle à l'axe des génératrices sur la matrice de détecteurs. Le signal peut alors être sommé selon la ligne pour améliorer le rapport signal sur bruit.

Les moyens d'imagerie peuvent selon une autre variante être une matrice de microlentilles sphériques ou asphériques formant sur une matrice de détecteurs élémentaires un ensemble de taches lumineuses.

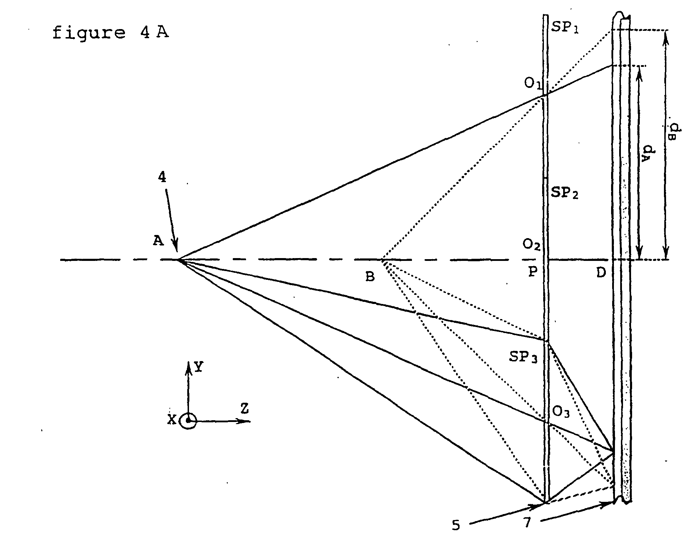

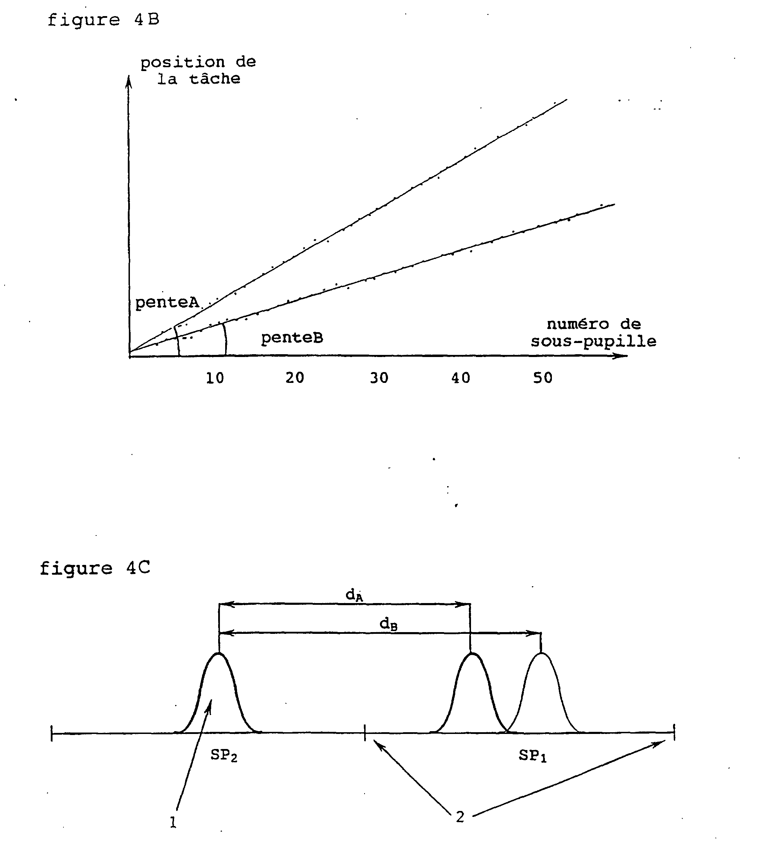

Le dispositif selon l'invention comporte en outre un circuit de calcul permettant, à partir des positions relatives d'au moins trois taches lumineuses, de calculer au moins un paramètre caractéristique de la distance de la source lumineuse au dispositif. Selon une variante, il comporte en outre un circuit de localisation spatiale des taches lumineuses sur le moyen de détection, déterminant, pour chaque tache lumineuse, sa position par rapport à une origine de référence. Les figures 4A, 4B et 4C permettent d'illustrer des modes de calcul possibles de la distance de la source.

Le circuit de localisation permet de déterminer la position du centre de chaque tache par rapport à une origine de référence. En ce qui concerne le calcul du centre de chaque tache, différentes techniques existent: on calcule par exemple le barycentre spatial des quelques détecteurs élémentaires sur lesquels s'étale la tache en affectant à chaque détecteur élémentaire un coefficient lié à son niveau d'éclairement; le barycentre constitue alors le centre de la tache et est déterminé à une fraction de largeur du détecteur élémentaire près. On peut aussi interpoler la tache par sa forme théorique ou par une fonction mathématique s'en approchant (un sinus cardinal $(\sin(x)/x)$, une gaussienne $(\exp(-x^2),...)$, technique connue et pratiquée dans le domaine astronomique. La position du centre de chacune des taches lumineuses peut être mesurée en considérant diverses origines: par rapport à un point fixe du détecteur ou par rapport à l'extrémité ou au centre de chacune des projections géométriques des sous-pupilles correspondantes sur le détecteur (dans ce cas, l'origine est dite 'flottante').

Pour expliquer des modes de calcul possibles de la distance de la source, on considère trois moyens d'imagerie, par exemple trois microlentilles côte à côte extraites de la partie centrale d'une barrette de microlentilles et formant trois sous-pupilles du dispositif, référencées sur la figure 4A par $SP_1$, $SP_2$, $SP_3$. Les microlentilles sont supposées réparties avec un pas sensiblement constant. La source lumineuse 4 supposée ponctuelle ou quasi-ponctuelle envoie des rayons dans le dispositif depuis successivement les positions A et B quelconques (A et B se situe dans le champs de mesure explicité ci-après). Les rayons issus de la source lumineuse traversent le plan 5 des microlentilles. Par conséquent, le faisceau est décomposé suivant les sous-pupilles correspondantes. Les lentilles réimagent la source dans le plan du détecteur 7 pour une position nominale de la source (il y a alors dans ce cas particulier conjugaison entre la source et le détecteur) et dans un plan au voisinage de celui-ci. pour une position autre (il y a défocalisation dans le plan du détecteur). Dans tous les cas, il se forme sur le détecteur un ensemble de taches lumineuses, réparties linéairement dans l'exemple choisi, chacune d'entre elle correspondant à une sous-pupille. La défocalisation n'est pas gênante car, les moyens d'imagerie étant très peu ouvert, ils fonctionnent dans le régime de diffraction et ne font pas d'imagerie, c'est-à-dire que les dimensions de la tache lumineuse correspondent à celles de la tache de diffraction du moyen d'imagerie.

Ces taches lumineuses sont centrées sur les rayons provenant de la source et passant par le centre optique $O_n$ de la microlentille correspondant à une sous-pupille $SP_n$ comme illustré en figure 4A (les rayons en trait plein concernent la position A et ceux de la position B sont en pointillé). Sur cette figure on néglige volontairement la défocalisation (A et B se réimagent dans le plan du détecteur) dont la seule conséquence est un étalement plus ou moins important de la tache lumineuse (mais celle-ci reste centrée sur le rayon défini ci-dessus). Dans le cas particulier exposé en figure 4A, la position de la tache lumineuse correspondant à la sous-pupille $SP_2$ est invariable, car l'axe optique de la lentille inscrite dans $SP_2$ est confondu avec l'axe de déplacement de la source lumineuse (axe défini par (AB)). Lors de la mise en oeuvre pratique du dispositif, la sous-pupille centrale n'est pas nécessairement bien centrée, mais elle est néanmoins proche du centre et par conséquent, la position de la tache lumineuse évolue très peu.

La figure 4A permet de montrer un avantage du système optique de mise en forme 10 illustré sur la figure 2. En effet, il permet d'une part de pouvoir adapter la distance de travail aisément (en changeant le système optique) et d'autre part de pouvoir disposer de toute la dynamique possible du système. En effet, la figure 4A montre que, sans objectif de mise en forme, la tache lumineuse sera toujours décentrée et une moitié de sous-pupille lui reste inaccessible. Au contraire, la figure 1 montre qu'à la distance nominale, la tache lumineuse est centrée dans la sous-pupille (foyer de la lentille). Lorsque le système optique de mise en forme 10 est omis, la matrice de lentilles assure alors seule et directement à la fois la décomposition du faisceau suivant des sous-pupilles et sa focalisation en taches lumineuses sur le détecteurs.

Un mode de calcul consiste à déterminer l'écart spatial moyen séparant les taches lumineuses successives deux à deux. Cette approche est possible car dans de nombreux cas particuliers de mise en oeuvre, les taches lumineuses sont équidistantes les unes des autres (ce qui est assimilable à une distribution linéaire des positions des taches lumineuses). C'est le cas lorsque les moyens d'imagerie sont sensiblement identiques et répartis avec un pas quasi-constant. Cet écart est un paramètre caractéristique de la distance de la source au dispositif. En effet, si on appelle $d_A$ et $d_B$ les écarts entre deux taches lumineuses successives, respectivement pour les positions A et B de la source, on a, selon l'exemple de la figure 4A :

$$d_A = \frac{[AD]}{[AD]-[DP]} [O_1O_2]$$

et

$$d_B = \frac{[BD]}{[BD]-[DP]} [O_1O_2]$$

$[O_1O_2] = p$ est le pas des sous-pupilles et $[DP] = f$, distance séparant le plan de sous-pupilles du détecteur, est un paramètre géométrique du système. D'où il est possible d'extraire les paramètres [AD] et [BD] à déterminer :

$$[AD] = \frac{f \times d_A}{d_a - p}$$

et

$$[BD] = \frac{f \times d_B}{d_B - p}$$

Cette approche met en évidence la redondance des informations fournies par le système (on mesure (N-1) fois dA et (N-1) fois dB si N est le nombre de taches).

Une façon pratique de calculer cet écart moyen consiste à déterminer la pente de la droite représentant la position du centre de chaque tache en fonction de la sous-pupille correspondante., indexée par exemple par un numéro (la sous-pupille 0 ou 1 étant choisie indifféremment parmi l'ensemble des sous-pupilles). La figure 4B illustre la distribution suivant une droite des points définis par les couples position de sous-pupille et position du centre de chacune des taches lumineuses. La dispersion autour de cette droite est liée aux défauts du système, notamment aux défauts de fabrication de la matrice de microlentilles. Le calcul de la pente de cette droite peut se faire par exemple par une méthode de régression linéaire classique (méthode des moindres carrés): on minimise la somme des carrés des écarts entre les mesures et les valeurs correspondantes de la droite estimée (on obtient alors la droite des moindres carrés).

La figure 4C détaille la répartition d'énergie sur le détecteur dans les sous-pupilles $SP_1$ et $SP_2$ de la figure 4A. L'écart séparant les centres des taches lumineuses formées (trait épais pour la source placée en A et trait fin pour la source placée en B) diffèrent du fait du déplacement longitudinal de la source. Cette figure permet de comprendre pourquoi le système peut tolérer une défocalisation, même importante: la tache s'étalera plus, mais son centre restera inchangé. En outre, la faible ouverture numérique des moyens d'imagerie et le régime de diffraction limitent l'importance de la défocalisation.

Les fonctions explicitées ci-dessus montrent que l'écart mesuré est une fonction bijective de la position longitudinale de la source. Il en est de même pour la pente. La définition du champ de mesure longitudinal, ou profondeur de champ, dépend des paramètres géométriques choisis (nombre de sous-pupilles, diamètre et focale des lentilles): il faut que l'ensemble des taches lumineuses formées sur le détecteur reste exploitable, c'est-à-dire que chacune des taches lumineuses conserve un profil satisfaisant (pas trop d'aberration et pas de défocalisation trop importante).

En ce qui concerne le champ de mesure, il est possible de définir plus généralement un volume de mesure. La source lumineuse doit se situer dans ce volume pour pouvoir être mesurée. Ledit volume est défini en fonction de la position et de la qualité des taches lumineuses: suivant l'axe X (voir figure 4A), il faut que les taches lumineuses restent sur le détecteur; suivant l'axe Y, il faut que les taches restent de bonne qualité et en nombre suffisant (elles s'imagent sur les sous-pupilles voisines, donc hors axe); suivant l'axe Z, il s'agit de la profondeur de champ, discutée préalablement. Par conséquent, le volume de mesure évolue en fonction des caractéristiques du système.

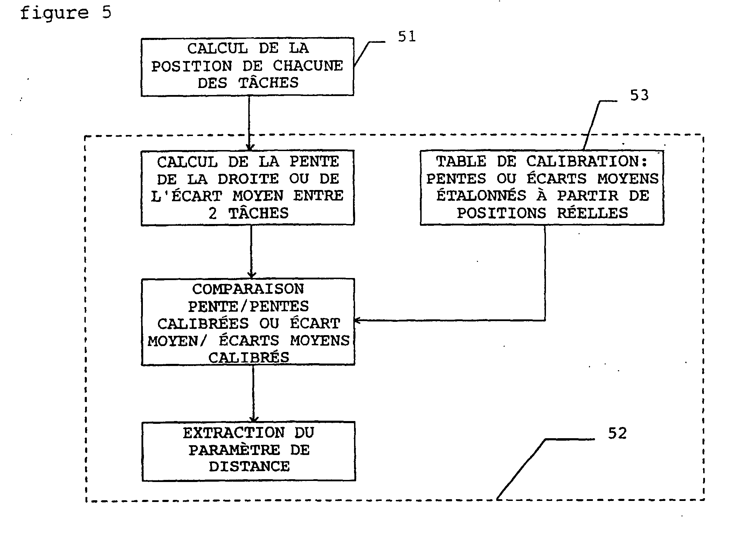

Les fonctions explicitées ci-dessus montrent comment à partir de la connaissance des paramètres géométriques du dispositif, on peut déterminer directement la distance de la source lumineuse au dispositif. En pratique, le circuit de calcul peut comporter une table de calibration contenant au moins un paramètre d'étalonnage (par exemple écart moyen ou pente de la droite tels qu'ils ont été décrits plus haut) dont les valeurs sont déterminées pour certaines distances de la source lumineuse. Ces valeurs peuvent être déterminées au préalable de manière expérimentale ou théorique. Il compare alors le paramètre caractéristique de la distance déterminé au cours de la mesure aux valeurs du paramètre d'étalonnage. La figure 5 décrit les étapes d'un mode de fonctionnement d'un dispositif selon l'invention comportant un circuit de localisation 51 et un circuit de calcul 52 comportant une table de calibration 53, le circuit de calcul comparant l'écart moyen ou la pente déterminés au cours de la mesure aux valeurs des paramètres d'étalonnage pour en extraire la valeur de la distance de la source.

Les exemples précédents ont traité de taches lumineuses disposées linéairement. De façon plus générale, chaque moyen d'imagerie étant indexé, la distance de la source lumineuse peut être déterminée à partir d'un paramètre caractéristique de la courbe représentant la fonction position de chaque tache lumineuse en fonction des indices des moyens d'imagerie. Une table de calibration contenant des paramètres d'étalonnage déterminés pour certaines distances de la source peut là encore être utilisée par le circuit de calcul pour extraire la distance de la source lumineuse.

Selon un autre mode de fonctionnement du dispositif selon l'invention, il n'est pas nécessaire de déterminer, au moyen du circuit de localisation, la position des taches lumineuses. Le circuit de calcul peut procéder à une analyse fréquentielle spatiale de la répartition des taches lumineuses, les paramètres caractéristiques de la distance de la source lumineuse étant alors déterminés à partir du spectre en fréquence. Par exemple, si l'ensemble de taches lumineuses sont réparties sensiblement périodiquement, un des paramètres déterminés à partir du spectre en fréquence est alors l'inverse de la période. L'analyse fréquentielle peut être faite par exemple au moyen d'algorithmes classiques de transformées de Fourier rapides.

Les figures 6A et 6B représentent une variante du dispositif décrit précédemment appliquée à la mesure simultanée des distances de plusieurs sources lumineuses ponctuelles. Plus particulièrement, il s'agit d'un ensemble de sources lumineuses formant une ligne.

L'émetteur de lumière 1 et son objectif 2 ne sont pas nécessairement alignés avec l'axe optique 9 du système de réception. La source lumineuse secondaire est créée par l'émetteur de lumière projeté suivant une ligne lumineuse 4 et 4bis. La figure 6A (vue de dessus) est une vue suivant un plan perpendiculaire à la ligne 4 projetée; la figure 6B (vue de coté) représente le système dans un plan contenant la ligne projetée 4bis. Le détecteur utilisé peut être une caméra CCD matricielle 7.

La lumière en retour est collectée par un système optique de mise en forme 10. Le faisceau est alors décomposé (comme dans le cas du premier dispositif décrit) dans le plan 5 des sous-pupilles suivant les sous-pupilles 6, puis focalisé sur le détecteur 7. La figure 6A met en évidence la similitude de mesure entre un dispositif mesurant la distance d'une source lumineuse ponctuelle ou quasi ponctuelle et un dispositif mesurant la distance d'une source lumineuse composée d'un ensemble de sources ponctuelles ou quasi ponctuelles agencées suivant une ligne. Dans chaque plan perpendiculaire à la ligne, on retrouve les mêmes éléments du premier dispositif décrit: une source lumineuse (intersection de la ligne et du plan perpendiculaire considéré), une barrette de moyens d'imagerie, par exemple des microlentilles, l'équivalent d'un détecteur linéaire (la ligne 11 du détecteur matriciel dans le plan perpendiculaire considéré): la distance séparant ladite source lumineuse du dispositif est fonction de l'écart mesuré entre les barycentres des taches lumineuses correspondantes se trouvant sur ledit détecteur linéaire (ligne 11 du détecteur matriciel 7). Une contrainte supplémentaire de mise en oeuvre doit néanmoins être prise en compte: la ligne lumineuse projetée doit être conjuguée ou proche de la conjugaison avec le détecteur dans le plan orthogonal à la direction de la barrette de moyens d'imagerie. Si tel n'est pas le cas, la résolution spatiale est dégradée. La résolution spatiale d'un tel dispositif, c'est-à-dire le nombre de points de mesure obtenu sur le profil est fonction du nombre de détecteurs élémentaires dans la direction parallèle à la ligne lumineuse projetée, ainsi que de sa défocalisation.

Le dispositif selon l'invention est destiné à se substituer à toute une gamme de capteurs (en particulier les capteurs à triangulation) dans le milieu industriel pour le contrôle de cotes. De plus, ce dispositif ouvre des champs d'applications nouvelles dans des domaines tels que la vision industrielle (pour le contrôle non destructif), la biologie (par exemple, suivi de trajectoire d'objet fluorescent), la robotique...

**Revendications**

1.    Dispositif de mesure de distance sans contact d'une source lumineuse comportant un moyen de détection optique (7) formé de détecteurs élémentaires et un ensemble de N moyens d'imagerie (6), N ≥ 3, **caractérisé en ce que**:

- les moyens d'imagerie permettent d'imager la source lumineuse sur un plan au voisinage de celui du moyen de détection, formant ainsi sur ledit moyen un ensemble d'au moins trois taches lumineuses, chaque tache s'étalant sur au moins deux détecteurs élémentaires;
- le dispositif comporte en outre, un circuit de calcul permettant, à partir des positions relatives d'au moins trois taches lumineuses, de calculer au moins un paramètre caractéristique de la distance de la source lumineuse au dispositif avec une précision dépendant du nombre N de taches lumineuses.

**2.** Dispositif de mesure selon la revendication 1, **caractérisé en ce que** le circuit de calcul comporte une table de calibration contenant au moins un paramètre d'étalonnage dont les valeurs sont déterminées pour certaines distances de la source lumineuse et compare le paramètre caractéristique aux valeurs dudit paramètre d'étalonnage.

**3.** Dispositif selon la revendication 1 ou 2, **caractérisé en ce qu'**il comporte en outre un circuit de localisation spatiale des taches lumineuses sur le moyen de détection, déterminant, pour chaque tache lumineuse, sa position (dA) par rapport à une origine de référence.

**4.** Dispositif de mesure selon la revendication 3, **caractérisé en ce que**:

- chaque moyen d'imagerie est indexé (SP1, SP2,...);
- le paramètre caractéristique de la distance calculé par le circuit de calcul est au moins un des paramètres caractéristiques de la courbe représentant la fonction position de chaque tache lumineuse (dA) en fonction des indices des moyens d'imagerie (dA = f (SP1,SP2,...).

**5.** Dispositif de mesure selon la revendication 4, **caractérisé en ce que** les positions des taches lumineuses déterminées par le circuit de localisation étant sensiblement réparties selon une ligne, la dite courbe est alors sensiblement une droite et le paramètre calculé par le circuit de calcul est la pente de la droite;

**6.** Dispositif de mesure selon la revendication 1 ou 2, **caractérisé en ce que** le circuit de calcul procède à une analyse fréquentielle spatiale de la répartition des taches lumineuses, les paramètres caractéristiques de la distance de la source lumineuse étant alors déterminés à partir du spectre en fréquence;

**7.** Dispositif de mesure selon la revendication 6, **caractérisé en ce que** l'ensemble de taches lumineuses sont réparties sensiblement périodiquement, un des paramètres déterminés à partir du spectre en fréquence étant alors l'inverse de la période;

**8.** Dispositif de mesure selon l'une quelconque des revendications précédentes, **caractérisé en ce que** les moyens d'imagerie sont constitués d'une barrette de microlentilles cylindriques, sensiblement identiques, disposées côte à côte avec un pas sensiblement constant, les génératrices des cylindres étant sensiblement parallèles, et **en ce que** le moyen de détection est une matrice de détecteurs élémentaires ou une barrette de détecteurs élémentaires dont l'axe est perpendiculaire aux génératrices des microlentilles;

**9.** Dispositif de mesure selon l'une quelconque des revendications précédentes, **caractérisé en ce que** ladite source lumineuse est constituée d'une surface élémentaire éclairée d'un objet, formant ainsi une source lumineuse secondaire, et **en ce qu'**il comporte un système d'éclairage permettant de créer ladite source lumineuse secondaire;

**10.** Dispositif de mesure selon la revendication 9, **caractérisé en ce qu'**il comporte un séparateur de faisceau placé entre la source lumineuse secondaire et les moyens d'imagerie, le séparateur dirigeant la lumière provenant du système d'éclairage vers ladite surface élémentaire et transmettant aux moyens d'imagerie la lumière provenant de la source lumineuse secondaire, permettant de rendre colinéaires l'axe du système d'éclairage et l'axe optique du dispositif;

**11.** Dispositif de mesure selon l'une quelconque des revendications précédentes, **caractérisé en ce qu'**il comporte un système optique de mise en forme placé entre la source lumineuse et les moyens d'imagerie pour adapter le champ de mesure de distance de la source lumineuse.

**Patentansprüche**

**1.** Berührungslose Messvorrichtung zur Bestimmung der Entfernung einer Lichtquelle, mit einer aus elementaren Detektoren und einer Anordnung aus N Abbildungsmitteln (6), wobei N ≥ 3 ist, gebildeten optischen Detektionseimichtung (7), **dadurch gekennzeichnet, dass**

- die Abbildungsmittel die Abbildung der Lichtquelle in einer Ebene in der Nähe der Ebene der Detektionseinrichtung ermöglichen und auf dieser Einrichtung ferner eine Anordnung aus wenigstens drei Lichtflecken bildet, wobei sich jeder Lichtfleck über wenigstens zwei elementare Detektoren erstreckt;

- die Vorrichtung ferner eine Berechnungsschaltung aufweist, rait der aus relativen Positionen der wenigstens drei Lichtflecken wenigstens ein Parameter, der für den Abstand der Lichtquelle von der Vorrichtung charakteristisch ist, mit einer von der Anzahl N der Lichtflecken abhängigen Genauigkeit errechenbar ist.

**2.** Messvorrichtung nach Anspruch 1, **dadurch ge-**

**kennzeichnet, dass** die Berecbnungsschaltung eine Kalibrierungstabelle aufweist welche mindestens einen Eichparameter enthält, dessen Werte durch gewisse Entfernungen der Lichtquelle bestimmt werden und den kennzeichnenden Parameter mit den Werten des besagten Eichparameters vergleicht.

3. Messvorrichtung nach Anspruch 1 oder 2, **dadurch gekennzeichnet, dass** sie ausserdem eine Ortsbestimmungsschaltung der Lichtflecken auf der Detektionseinrichtung aufweist, welche für jeden Lichtfleck seine Lage (dA) in Bezug auf eine Ursprungsreferenz bestimmt.

4. Messvorrichtung nach Anspruch 3, **dadurch gekennzeichnet, dass**:

   - jedes Abbildungsmittel indexiert ist (SP1, SP2, ....);
   - der von der Berechnungsschaltung errechnete, für die Entfernung kennzeichnende Parameter mindestens einer der kennzeichnenden Parameter der Kurve ist. welche die Positionsfunktion jedes Lichtflecks (dA) in Abhängigkeit der Indizien der Abbildungsmittel darstellt (dA=f (SP1, SP2,..).

5. Messvorrichtung nach Anspruch 4, **dadurch gekennzeichnet, dass** die von der Ortsbestimmungsschaltung bestimmten Lagen der Lichtflecke im wesentlichen entlang einer Linie verteilt sind, wobei die besagte Kurve also im wesentlichen eine Gerade und der von der Berechnungsschaltung errechnete Parame ter die Steigung der Geraden ist.

6. Messvorrichtung nach Anspruch 1 oder 2, **dadurch gekennzeichnet, dass** die Berechnungsschaltung eine frequentielle räumliche Analyse der Verteilung der Lichtflecken vornimmt, wobei also die für die Entfernung der Lichtquelle kennzeichnenden Parameter aus dem Frequenzspektrum bestimmt werden.

7. Messvorrichtung nach Anspruch 6, **dadurch gekennzeichnet, dass** die Anordnung der Lichtflekken im wesentlichen periodisch verteilt ist, wobei einer der aus dem Frequenzspektrum bestimmten Parameter demgemäß der Periodenkehrwert ist.

8. Messvorrichtung nach einem der vorangehenden Ansprüche, **dadurch gekennzeichnet, dass** die Abbildungsmittel aus einer Leiste zylindrischer, im we entlichen identischer. nebeneinander im wesentlich gleichabständig angeordneter Mikolinsen bestehen, und dass das Erfassungsmittel eine Matrix elementarer Detektoren oder eine Leiste elementarer Detektoren ist, deren Achse rechtwinklig zu den Erneugenden der Mikrolinsen verläuft.

9. Messvorrichtung nach einem der vorangehenden Ansprüche, dadurch gekennzeichnei, dass die genannte Lichtquelle aus einer elementaren beleuchteten Oberfläche eines Objektes besteht, wodurch so eine sekundäre Lichtquelle gebildet wird, und ein Beleuchtungssystem aufweist, die die Bildung der genannten sekundären Lichtquelle erlaubt.

10. Messvorrichtung nach Anspruch 9, **dadurch gekennzeichnet, dass** sie einen zwischen der sekundären Lichtquelle und den Abbildungsmitteln angeordneten Strahlteiler aufweist, wobei der Strahlteiler das Licht , welches vom Beleuchtungssystem kommt, zur genannten elementaren Oberfläche leitet und das von der sckundären Lichtquelle kommende Licht zu den Abbildungsmitteln überträgt, wodurch es ermöglicht wird, die Achse des Beleuchtungssystems und die optische Achse der Vorrichtung zusammer fallen zu lassen.

11. Messvorrichtung nach einem der vorangehenden Ansprüche, **dadurch gekennzeichnet, dass** sie ein zwischen der Lichtquelle und den Abbildungsmitteln angeordnetes optisches System zur Formgebung aufweist, welches dazu dient, den Messbereich für die Entfernung der Lichtquelle anzupassen.

## Claims

1. Device for contactless measurement of distance from a light source including an optical detection means (7) formed by elementary detectors and a set of N imaging means (6), N ≥ 3,, **characterised in that**:

   - the imaging means make it possible to image the light source on a plane in the vicinity of that of the detection means, thus forming, on the said means, a set of at least three light spots, each spot being spread over at least two elementary detectors;
   - the device further includes a calculating circuit making it possible, on the basis of the relative positions of at least three light spots, to calculate at least one parameter characteristic of the distance from the light source to the device with an accuracy depending on the number N of light spots.

2. Measuring device according to Claim 1, **characterised in that** the calculating circuit includes a calibration table containing at least one calibration parameter the values of which are determined for certain distances from the light source and compares the characteristic parameter with the values of the said calibration parameter.

3. Device according to Claim 1 or 2, **characterised in that** it further includes a circuit for spatial position-fixing of the light spots on the detection means, determining, for each light spot, its position (dA) with respect to a reference origin.

4. Measuring device according to Claim 3, **characterised in that** :

    - each imaging means is indexed (SP1, SP2, etc.);
    - the parameter characteristic of the distance calculated by the calculating circuit is at least one of the parameters characteristic of the curve representing the position function of each light spot (dA) as a function of the indices of the imaging means (dA = f(SP1, SP2,...).

5. Measuring device according to Claim 4, **characterized in that** the positions of the light spots determined by the position-fixing circuit are substantially distributed along a line, the said curve is then substantially a straight line and the parameter calculated by the calculating circuit is the slope of the straight line.

6. Measuring device according to Claim 1 or 2, **characterised in that** the calculating circuit carries out a spatial frequency analysis of the distribution of the light spots, the parameters characteristic of the distance from the light source then being determined on the basis of the frequency spectrum.

7. Measuring device according to Claim 6, **characterised in that** the set of light spots are distributed substantially periodically, one of the parameters determined on the basis of the frequency spectrum then being the inverse of the period.

8. Measuring device according to any one of the preceding claims, **characterised in that** the imaging means consist of a linear array of cylindrical micro-lenses, substantially identical, arranged side-by-side with a substantially constant pitch, the generatrices of the cylinders being substantially parallel, and **in that** the detection means are a matrix of elementary detectors or a linear array of elementary detectors the axis of which is perpendicular to the generatrices of the micro-lenses.

9. Measuring device according to any one of the preceding claims, **characterised in that** the said light source consists of an illuminated elementary surface of an object, thus forming a secondary light source, and **in that** it includes an illumination system making it possible to create the said secondary light source.

10. Measuring device according to Claim 9, **characterised in that** it includes a beam splitter placed between the secondary light source and the imaging means, the splitter directing the light originating from the illumination system onto the said elementary surface and transmitting, to the imaging means, the light originating from the secondary light source, making it possible to make the axis of the illumination system and the optical axis of the device collinear.

11. Measuring device according to any one of the preceding claims, **characterised in that** includes a shaping optical system placed between the light source and the imaging means for adapting the field for measuring distance from the light source.

figure 1

figure 2

figure 3

**profil de 12 tâches**

figure 4 A

figure 4 B

figure 4C

figure 5

```
                 ┌─────────────────────┐  ╱── 51
                 │   CALCUL DE LA       │
                 │ POSITION DE CHACUNE  │
                 │    DES TÂCHES        │
                 └─────────────────────┘
                           │
     ┌─────────────────────┼───────────────────────────────────────┐  ╱── 53
     │  ┌─────────────────────┐        ┌─────────────────────────┐  │
     │  │ CALCUL DE LA PENTE  │        │ TABLE DE CALIBRATION:   │  │
     │  │ DE LA DROITE OU DE  │        │ PENTES OU ÉCARTS MOYENS │  │
     │  │ L'ÉCART MOYEN ENTRE │        │ ÉTALONNÉS À PARTIR DE   │  │
     │  │     2 TÂCHES        │        │ POSITIONS RÉELLES       │  │
     │  └─────────────────────┘        └─────────────────────────┘  │
     │            │                               │                 │
     │  ┌─────────────────────┐                   │                 │
     │  │   COMPARAISON        │                  │                 │
     │  │  PENTE/PENTES        │◄─────────────────┘                 │
     │  │ CALIBRÉES OU ÉCART   │                                    │
     │  │ MOYEN/ ÉCARTS MOYENS │                                    │
     │  │    CALIBRÉS          │                                    │
     │  └─────────────────────┘                                    │
     │            │                                                 │
     │  ┌─────────────────────┐              ╱── 52                 │
     │  │  EXTRACTION DU       │                                    │
     │  │  PARAMÈTRE DE        │                                    │
     │  │   DISTANCE           │                                    │
     │  └─────────────────────┘                                    │
     └─────────────────────────────────────────────────────────────┘
```

figure 6 A
vue de dessus

objet

figure 6 B
vue de coté

16